# EUROPEAN PATENT APPLICATION

(11) **EP 1 544 706 A1**
(43) Date of publication of application: **22.06.2005**
(21) Application number: 03293225.3
(22) Date of filing: 18.12.2003
(51) Int. Cl.: G06F 1/00

(54) **Method for protecting and using data files suitable for personalizing smart-cards**

(71) Applicant: Axalto S.A., 92120 Montrouge (FR)
(72) Inventor: Amador, Eric, 92120 Montrouge (FR)
(74) Representative: Cassagne, Philippe M.J.

(57) **Abstract**

A method for protecting a data file suitable for personalizing smart-cards in a personalization site which comprises the steps of :
- generating a first master key (UA_MK1) by a first cryptographic hardware means (HSM1) of a first site (S1),
- generating a first encryption key (UA_DD_ENC1) by the cryptographic hardware means (HSM1) of the first site (S1),
- generating a random number (RAND) by the cryptographic hardware means (HSM1) of the first site (S1),
- calculating a session key (UA_SK) based on the first master key (UA_MK1) and the random number (RAND) by the cryptographic hardware means (HSM1) of the first site (S1),
- protecting the data file by using the session key (UA_SK),
- protecting the random number (RAND) by using the first encryption key (UA_DD_ENC1),
- generating a protected data file comprising a header constituted by the protected random number and data constituted by the protected data.

## Description

### Field of the invention

The invention relates to a method for the protection of sensitive data, in particular when such data are exchanged between two types of entity, for example smart-cards production or personalization sites. The invention also relates to a method for using data protected by such a method for the protection of sensitive data.

### Background of the invention

Usually, all personalization data generated into a production or personalization site (local site) are protected in term of integrity and confidentiality by using keys generated into the local site.

These keys are generated by using software. All cryptographic calculations are done by software means.

To be able to transfer a file from one site to another site (for example in case a overcharged factory give personalization work to an under-charged factory), it is necessary to "unprotect" (decrypt + integrity verification) the source file using the source site keys and to "protect" (encrypt + integrity calculation) this file under the destination site keys.

The transfer of a file from a source site to a destination site is requiring a lot of calculations, all the data of the files need to be processed (unprotect from source site and protect with destination site keys)

Because, the local keys are generated by software, the potential risk for those keys to be compromised is very high (for example through fraud of an employee of factory having access to keys).

Further, the keys used to protect the data of one site are the same for all the data files (thus a fraud in one factory can have an impact on large scale).

### Object and summary of the invention

Therefore it is an object of the present invention to provide a method for protecting and using data files suitable for personalizing smart-cards that overcomes the at least one shortcoming of the prior art methods.

According to the invention, the method for protecting a data file suitable for personalizing smart-cards in a personalization site, comprises the steps of :
- generating a first master key by a first cryptographic hardware means of a first site,
- generating a first encryption key by the cryptographic hardware means of the first site,
- generating a random number by the cryptographic hardware means of the first site,
- calculating a session key based on the first master key and the random number by the cryptographic hardware means of the first site,
- protecting the data file by using the session key,
- protecting the random number by using the first encryption key,
- generating a protected data file comprising a header constituted by the protected random number and data constituted by the protected data.

When the protected data file needs to be exchanged with another site for further processing, it is just necessary to transcript the derivation data from local key to an exchange key established between the source and the destination site. This avoid a processing of the whole data file which considerably increase the performance of the whole method.

In such a case, the method further comprises the steps of :
- generating an data exchange key by the first cryptographic hardware means of the first site,
- transmitting said data exchange key to the second cryptographic hardware means of the second site based on a secure key exchange protocol,
- un-protecting the random number by using the encryption key of the cryptographic hardware means of the first site,
- protecting the random number by using the data exchange key of the cryptographic hardware means of the first site,
- updating the protected data file by updating the header constituted by the protected random number under the data exchange key,
- transmitting the protected data file to the second site,
- un-protecting the random number by using the data exchange key of the cryptographic hardware means of the second site,
- protecting the random number by using the second encryption key of the second cryptographic hardware means of the second site,
- updating the protected data file by updating the header constituted by the protected random number under the second encryption key.

The first site can be for example a central keys management site while the second site can be for example a smart-card personalization site. It is also possible that a site cumulate the two functions of being a central keys management and smart-card personalization site.

The use of a protected data file by a smart-cards personalizing equipment in a personalization site, comprises the steps of :
- reading the header of the protected data file constituted by the protected random number,
- un-protecting the random number from the header by using the encryption key of the cryptographic hardware means of the site,
- calculating the session key based on the un-protected random number and the first master key by the cryptographic hardware means,
- un-protecting the protected data by using the calculated session key.

According to the invention the data files are protected with keys managed centrally and keys managed locally.

For example the encryption key is specific to the site and used to protect all the data files of the site. The protection keys are different for each new files which enables an improvement of the security (the random number is specific to each data file).

Keys Managed centrally are distributed to the personalization sites. As an example the first master key can be transmitted from the first site to a second site, and protected by a second cryptographic hardware means of the second site. The master key transmission step is based on a secure key exchange protocol.

Keys Managed locally are generated into the local personalization sites and never leaves the local personalization site.

Advantageously, these keys are managed with hardware security devices or cryptographic hardware means.

The keys used to protect a particular file are session keys calculated with central keys with a double derivation algorithm (based for example on DES or TDES algorithm known by man skilled in the domain of cryptography). Local keys protect derivation data used to obtain session keys.

The header which is added to the data file, contains the reference of the central keys and the encrypted derivation data.

The destination site when receiving the file transcripts the derivation data from the exchange key to its local key. Advantageously, the transcription of the whole file is avoided with the method according to the invention.

With the invention, the data file is protected with the calculated session keys (in clear) with software. This enable a high performance in term of site transferring or equipment using speed.

With this mechanism it is possible to manage both security (the master keys are protected with hardware security device) and performance (session keys are used by software).

### Brief description of the drawings

The following detailed description, given by way of example, will be best understood with the accompanying drawings in which :
- Figure 1 represents schematically the method of protecting data file according to the invention and transmission of such file between different entities,
- Figure 2 represents schematically a particular implementation of the method according to the invention.

### Detailed description of the invention

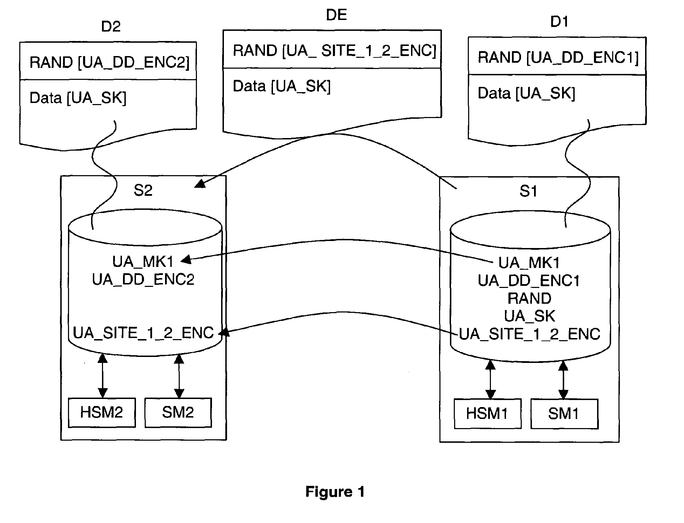

Figure 1 conceptually illustrates the method of protecting data file according to the invention and transmission of such file between different entities

In a first site S1, a first cryptographic hardware means HSM1 generates :
- a first master key UA_MK1,
- a first encryption key UA_DD_ENC1,
- a random number RAND.

The first cryptographic hardware means HSM1 calculates a session key UA_SK based on the first master key UA_MK1 and the random number RAND. This calculation involves for example a double derivation algorithm.

Either the first cryptographic hardware means HSM1 or a first software means SM1 (alternative) protects :
- the data file by using the session key UA_SK,
- the random number RAND by using the first encryption key UA_DD_ENC1.
   Finally, a protected data file D1 comprising a header constituted by the protected random number RAND[UA_DD_ENC1] and data constituted by the protected data Data[UA_SK] is generated either by the first cryptographic hardware means HSM1 or by a first software means SM1 (alternative).
   All the keys, number, data can be either stored in a database within the cryptographic hardware means HSM1 or in an memory means which is external to the cryptographic hardware means HSM1 (alternative).

The first master key UA_MK1 from the first site S1 is distributed to other sites, for example to the second site S2.

When a protected data file is to be transmitted to another site for further use, the first cryptographic hardware means HSM1 of the first site S1 generates a data exchange key UA_SITE_1_2_ENC and transmits it to the second cryptographic hardware means HSM2 of the second site S2. The first cryptographic hardware means HSM1 generates an exchange protected data file DE by :
- un-protecting the random number RAND by using the encryption key UA_DD_ENC1,
- protecting the random number RAND by using the data exchange key UA_SITE_1_2_ENC, and
- updating the protected data file by updating the header constituted by the protected random number under the data exchange key UA_SITE_1_2_ENC. Advantageously, the protected data itself remain unchanged.

The exchange protected data file DE is transmitted to the second site S2.

The cryptographic hardware means HSM2 of the second site S2 generates a new protected data file D2, by :
- un-protecting the random number RAND by using the data exchange key UA_SITE_1_2_ENC,
- protecting the random number RAND by using a second encryption key UA_DD_ENC2 generated by the second cryptographic hardware means HSM2,
- updating the protected data file by updating the header constituted by the protected random number under the second encryption key UA_DD_ENC2.

The keys and data files transmission between the first site S1 and the second site S2 is based on known secure key exchange protocol.

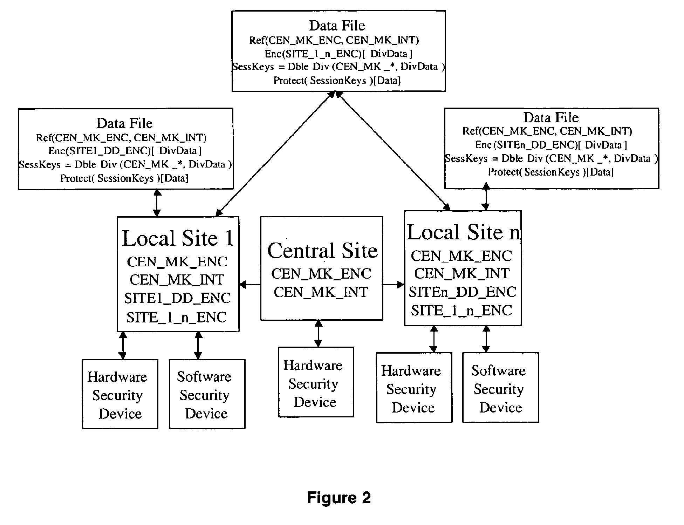

Figure 2 shows a particular implementation of the method according to the invention in which a central Site is dedicated to the management of keys while the Local Site 1 or n are smart-card personalization site. Also, in this particular implementation two keys are simultaneously involve in the protection the data file, namely an encryption (ensuring data confidentiality) and a integrity key (ensuring data originality).

Session Protection Keys = f (Central Keys, FIPS Rnd, file identification) with for example :
FIPS Rnd = FIPS random generated for each data file,
File identification = unique string that allows to identify the data file,
Derivation Data = FIPS Rnd | File Identification,
Encrypted Derivation Data = Encrypt with Local Keys ( FIPS Rnd | File Identification).

F = Double Derivation (Central Keys, Derivation Data)

The double derivation is executed by an hardware security device but the result of this derivation is returned in clear to be used with software.

The Central Site generates two master keys CEN_MK_INT (for integrity) and CEN_MK_ENC (for confidentiality protection) using its hardware security device.

These master keys are exchanged with all the local sites using standard key exchange protocols.

Each local site generates periodically a key SITEn_DD_ENC using its hardware security device.

When a site generates a data file it generates first the session keys that are going to be used to protect this file.

Derivation data are calculated using file information and a fips random (the hardware security device can be used to generate FIPS random).

Derivation data are encrypted using the local site derivation data protection key (SITEn_DD_ENC) with an hardware security device.

Encrypted Derivation Data is put into the header of the file that is being generated.

Session keys (for confidentiality and for integrity) are calculated using clear derivation data and central master keys (CEN_MK_INT, CEN_MK_ENC) using a double derivation algorithm.

Derivation data are for example formatted on 32 bytes.

First derivation is done by using the site hardware security device into a data encryption key token (protected by the hardware security device).

Second derivation is done with the hardware security device using the derived key obtained during the first derivation and the second part of the derivation data into a clear key (no more protected with the hardware security device).

The sensitive data are then protected in confidentiality with session confidentiality keys and in term of integrity with session integrity keys.

The protection is fast as the session keys can be processed using software and not hardware security device.

It is not possible to calculate those session keys without the master keys and an hardware security device.

If a file generated into site 1 is caught and sent to an another site, then the destination site will not be able to process this file. In case a file is fraudulently decrypted, the fraud is limited to this specific file because the protection is file specific (the random number being specific to each data file).

The destination site needs to calculate the session keys to be able to access to the sensitive data protected into site 1. To calculate the session keys it is necessary to have the central master keys which is the case but also the derivation data. The derivation data are enciphered using the site 1 derivation data encryption key SITE_1_DD_ENC, this key will never leaves site 1. Thus it is not possible for an external site to use the data file of site 1 without its authorization.

If site 1 wants to give its authorization to site n to process its file then site 1 just have to decrypt the derivation data, encrypt the derivation data under derivation data exchange key (SITE_1_n_ENC).

The destination site n, will decrypt the derivation data using SITE_1_n_ENC, and reencrypt the derivation data under its site key SITE_n_DD_ENC.

The protection of all the data into the file does not need to be changed.

Now site n is capable of calculating the session keys and thus to process the data file.

For example a personalization machine to process this type of file will do the following operations:
- read the header of the data file, extract the encrypted derivation data,
- use its hardware security device and site derivation data encryption key SITE_n_DD_ENC to decrypt the derivation data,
- use its hardware security device to derive two times the central master keys CEN_MK_ENC, CEN_MK_INT using the decrypted derivation data into the session keys,
- then the sensitive data of the data file are un-protected using these session keys and fast software calculation.
- The sensitive data are then upload into the smart-card by the personalization machine.

## Claims

1. A method for protecting a data file suitable for personalizing smart-cards in a personalization site, comprising the steps of :
- generating a first master key (UA_MK1) by a first cryptographic hardware means (HSM1) of a first site (S1),
- generating a first encryption key (UA_DD_ENC1) by the cryptographic hardware means (HSM1) of the first site (S1),
- generating a random number (RAND) by the cryptographic hardware means (HSM1) of the first site (S1),
- calculating a session key (UA_SK) based on the first master key (UA_MK1) and the random number (RAND) by the cryptographic hardware means (HSM1) of the first site (S1),
- protecting the data file by using the session key (UA_SK),
- protecting the random number (RAND) by using the first encryption key (UA_DD_ENC1),
- generating a protected data file comprising a header constituted by the protected random number and data constituted by the protected data.

2. A method for protecting a data file according to claim 1, wherein the step of calculating a session key (UA_SK) uses a double derivation algorithm.

3. A method for protecting a data file according to any one of the preceding claims, wherein the session key is an encryption key.

4. A method for protecting a data file according to any one of the preceding claims, wherein the session key is an integrity key.

5. A method for protecting a data file according to claim 1, wherein the first encryption key (UA_DD_ENC1) is specific to the first site (S1) and used to protect all the data files of the first site (S1).

6. A method for protecting a data file according to claim 1, wherein the random number (RAND) is specific to each data file.

7. A method for protecting a data file according to claim 1, wherein the first master key (UA_MK1) and the first encryption key (UA_DD_ENC1) are stored in the cryptographic hardware means (HSM1) memory of the first site (S1).

8. A method for protecting a data file according to claim 1, wherein the first master key (UA_MK1) and the first encryption key (UA_DD_ENC1) are protected by the cryptographic hardware means (HSM1) and stored in an storage means external to the cryptographic hardware means (HSM1).

9. A method for protecting a data file according to claim 1, wherein the steps of protecting the data file and generating the protected data file are performed by the cryptographic hardware means (HSM1).

10. A method for protecting a data file according to claim 1, wherein the steps of protecting the data file and generating the protected data file are performed by a software.

11. A method for protecting a data file according to claim 1, wherein it further comprises the steps of :
- transmitting the first master key (UA_MK1) from the first site (S1) to a second site (S2),
- protecting the first master key (UA_MK1) by a second cryptographic hardware means (HSM2) of the second site (S2).

12. A method for protecting a data file according to the preceding claim, wherein the first master key (UA_MK1) transmission step is based on a secure key exchange protocol.

13. A method for protecting a data file according to the preceding claim, wherein the secure key exchange protocol comprises the steps of :
- generating at least two master key parts (MK1, MK2) by the first cryptographic hardware means (HSM1) of the first site (S1),
- transmitting each of the at least two master key parts (MK1, MK2) to at least two different person of the first site (S1), each person receiving one master key part (MK1) different from the other (MK2),
- transmitting said master key part (MK1, MK2) to at least two different person of the second site (S2), each person receiving one master key part (MK1) different from the other (MK2),
- feeding said master key parts (MK1, MK2) to the second cryptographic hardware means (HSM2) of the second site (S2),
- calculating the first master key (UA_MK1) based on said master key parts (MK1, MK2) by the second cryptographic hardware means (HSM2) of the second personalization site (S2).

14. A method for protecting a data file suitable for personalizing smart-cards in a personalization site according to claim 1, comprising the steps of :
- generating an data exchange key (UA_SITE_1_2_ENC) by the first cryptographic hardware means (HSM1) of the first site (S1),
- transmitting said data exchange key (UA_SITE_1_2_ENC) to the second cryptographic hardware means (HSM2) of the second site (S2) based on a secure key exchange protocol,
- un-protecting the random number (RAND) by using the encryption key (UA_DD_ENC1) of the cryptographic hardware means (HSM1) of the first site (S1),
- protecting the random number (RAND) by using the data exchange key (UA SITE_1_2_ENC) of the cryptographic hardware means (HSM1) of the first site (S1),
- updating the protected data file by updating the header constituted by the protected random number under the data exchange key (UA_SITE_1_2_ENC),
- transmitting the protected data file to the second site (S2),
- un-protecting the random number (RAND) by using the data exchange key (UA_SITE_1_2_ENC) of the cryptographic hardware means (HSM2) of the second site (S2),
- protecting the random number (RAND) by using the second encryption key (UA_DD_ENC2) of the second cryptographic hardware means (HSM2) of the second site (S2),
- updating the protected data file by updating the header constituted by the protected random number under the second encryption key (UA_DD_ENC2).

15. A method for using a protected data file suitable for personalizing smart-cards in a personalization site, comprising the steps of :
- reading the header of the protected data file constituted by the protected random number,
- un-protecting the random number (RAND) from the header by using the encryption key (UA_DD_ENC1) of the cryptographic hardware means (HSM1, HSM2) of the site (S1, S2),
- calculating the session key (UA_SK) based on the un-protected random number (RAND) and the first master key (UA_MK1) by the cryptographic hardware means (HSM1, HSM2),
- un-protecting the protected data by using the calculated session key (UA_SK).

16. A method for using a protected data file according to claim 15, wherein the step of un-protecting the protected data is performed by the cryptographic hardware means (HSM1, HSM2).

17. A method for using a protected data file according to claim 15, wherein the step of un-protecting the protected data is performed by a software.
